# EUROPEAN PATENT SPECIFICATION

(11) **EP 2 029 350 B1**
(45) Date of publication and mention of the grant of the patent: **19.05.2010**
(21) Application number: 07790164.3
(22) Date of filing: 18.06.2007
(51) Int. Cl.: B29D 30/06, B29C 33/20, B29C 35/02

(54) **TYRE VULCANISING PRESS**
REIFENVULKANISIERPRESSE
PRESSE À VULCANISER DES PNEUS

(43) Date of publication of application: 04.03.2009
(73) Proprietor: Mai S.p.A., 37050 Isola Rizza (Verona) (IT)
(72) Inventor: MAI, Renato, 37100 Verona (IT)
(74) Representative: Ponchiroli, Simone
(86) International application number: PCT/IT2007/000432
(87) International publication number: WO 2008/155782

(56) References cited:
- EP-A- 1 468 814
- WO-A-2006/070412
- DE-A1- 4 041 524
- US-B1- 6 949 213

## Description

### Technical Field

The present invention relates to a tyre vulcanising press.

In particular, the present invention relates to a vulcanising press for large tyres, for example those used on mine vehicles (which may even have a diameter of more than four metres).

### Background Art

As is known, vulcanising presses comprise a chamber having a toroidal shape designed to contain the green tyre to be formed. In general, the green tyre, is supported by an inflatable support around which all of the components of which the tyre consists are wound, for example the plies, the rubber and if necessary metal reinforcing cables.

The toroidal chamber consists of a pair of annular plates positioned opposite one another and respectively at an upper zone and a lower zone of the press, for forming the tyre sidewalls, and also consists of a series of curved sectors, able to move radially towards/away from one another so as to make up the chamber. The surfaces of the opposite plates and the sectors towards the toroidal chamber are shaped in such a way as to constitute a mould having the shape of the tyre to be obtained.

In particular, the curved sectors are moved, by suitable actuator means, towards one another towards the annular plates to form the toroidal chamber and in conjunction with one another to constitute a cylindrical surface, for forming the tread of the tyre to be vulcanised. In this situation the green tyre is housed in the toroidal chamber and is formed by supplying steam (or another fluid) at a high temperature into the press, whose components (plates and radial sectors) are suitably hollow.

In the above-mentioned position in which they have been moved towards one another, the sectors are kept together and drawn near one another, and with the respective plates, by suitable locking means such as bolts on each sector. In this way, the sectors are connected to one another by manually coupling the bolt of each sector to a suitable coupling element projecting from the adjacent sector.

The actuator means also move the sectors away from one another to "open" the toroidal chamber and allow insertion of the tyre to be vulcanised and removal of the vulcanised tyre. In this situation the bolts are separated from the respective coupling elements to allow each sector to be released from the adjacent one and to detach the sectors from one another.

However, the tyre vulcanising devices briefly described above have several disadvantages.

Said disadvantages are mainly linked to the operations for locking the sectors in the respective position in which they have been moved towards one another.

It should be noticed that the locking operation, and consequently the releasing operation, is carried out by manually acting on each bolt, usually consisting of a butterfly bolt screwed onto a respective threaded rod.

As a result, manual tightening of each bolt increases the production times for each tyre. Moreover, manual action on the curved sectors is particularly hazardous for the operator, who may come into contact with mechanical parts heated to a high temperature.

There are also prior art vulcanizing presses in which the various sectors are locked in the position in which they have been moved towards one another directly by the actuator means, which comprise, for each sector, a connecting rod fixed to the sector which, when the sector is in the position close to the adjacent sectors, is positioned at its dead centre and prevents sector radial movements.

Another disadvantage is the high heat output of the presses described above.

To adapt the press to tyres of different sizes, different moulds are used which may be mounted in the press to form the toroidal chamber. However, as the diameter of the tyre to be vulcanised is reduced, spacer material must be inserted between the mould and the press. This is usually metal material with a high level of thermal conductivity, since it physically separates the press heated by the operating fluid (which, as already said flows in the chambers made in the various parts of the press) and the mould which is the component that should be heated. Therefore, it is immediately clear how, with an increase in the thickness of the spacer material, the transmission of heat from the press to the mould becomes increasingly difficult, with a consequent significant increase in the amount of heat that must be supplied to the press.

There are also prior art radial vulcanising presses in which the sectors are locked by the action of sliding elements connected to the sectors themselves by an angled-plane connection with a radial direction of action (for example patent US 5,145,688, on which the preamble of claim 1 is based).

Other examples of apparatuses for the moulding of pneumatic tyres are described in the following patents: DE 40 41 524, WO 2006/070412, EP 1 468 814 and US 6 949 213.

### Disclosure of the Invention

In this context, the main technical purpose of the present invention is to provide a tyre vulcanising press which is free of the above-mentioned disadvantages and guarantees good mould locking.

In particular, the present invention has for an aim to provide a tyre vulcanising press able to minimise the manual work on the press, especially on the mechanical parts subject to high temperatures during press opening and closing.

Another aim of the invention is to provide a tyre vulcanising press which can be used for a plurality of different tyres and at the same time has contained costs and dimensions.

According to the invention the technical purpose indicated and the aims specified are substantially achieved by a tyre vulcanising press comprising the technical features described in claim 1.

Particular embodiment of the invention are the subject of the dependent claims.

### Brief Description of the Drawings

Further features and advantages of the present invention are more apparent in the detailed description below, with reference to a preferred, non-limiting, example of a tyre vulcanising press, illustrated in the accompanying drawings, in which:
Figure 1 is a perspective view of a tyre vulcanising press in accordance with the present invention;
Figure 2 is a side elevation view' in cross-section of the press of Figure 1 in a respective operating condition;
Figure 2a is an enlarged view of a detail from Figure 2 in another operating condition;
Figure 3 is a perspective view in cross-section of a first construction detail of the press in accordance with the present invention;
Figure 4 is a perspective view of a second detail from Figure 1.
Figure 5 is a partly exploded perspective view of a portion of the press of Figure 1;
Figure 6 is a side elevation view in cross-section of a third detail of the press from Figure 1; and

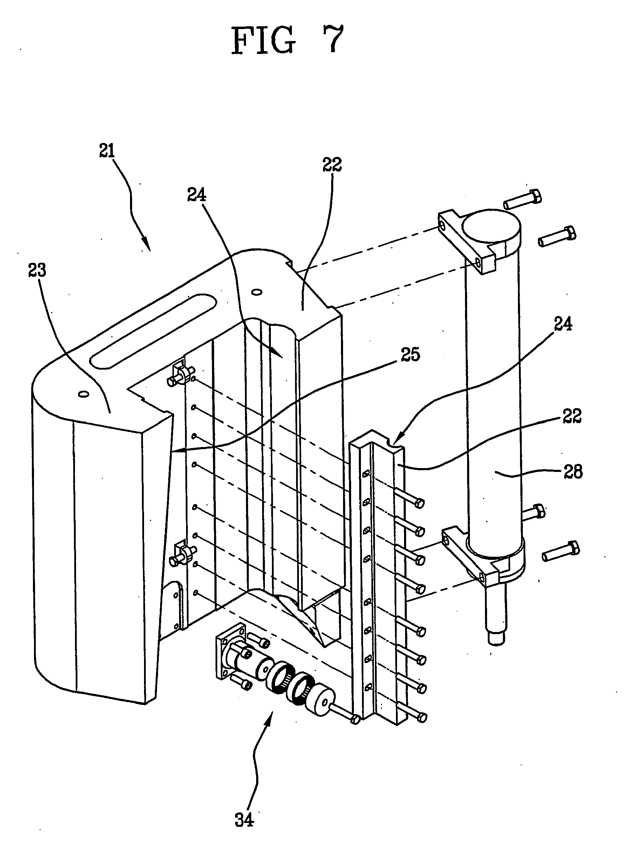

Figure 7 is an exploded perspective view of the detail partly illustrated in Figure 6.

### Detailed Description of the Preferred Examples of the Invention

With reference to the accompanying drawings, the numeral 1 denotes as a whole a tyre vulcanising press. The press 1 is advantageously used for vulcanising large tyres, for example tyres with a diameter of up to four metres or more, normally used on vehicles for mines, quarries or the like. However, it should be pointed out that the present invention may be used for vulcanising any type of tyre, for the road or for off road use, irrespective of the dimensions and its application.

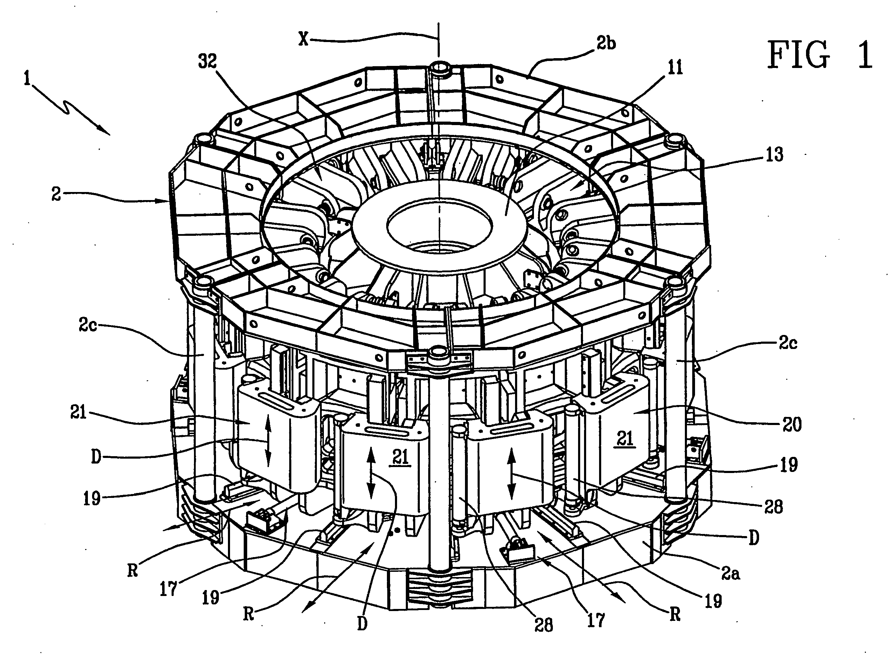

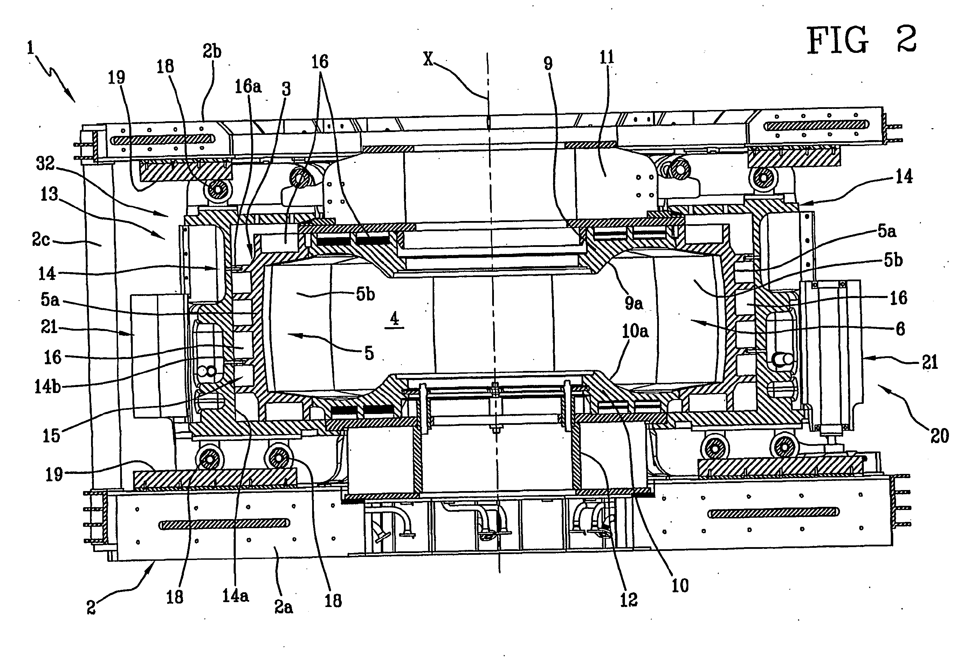

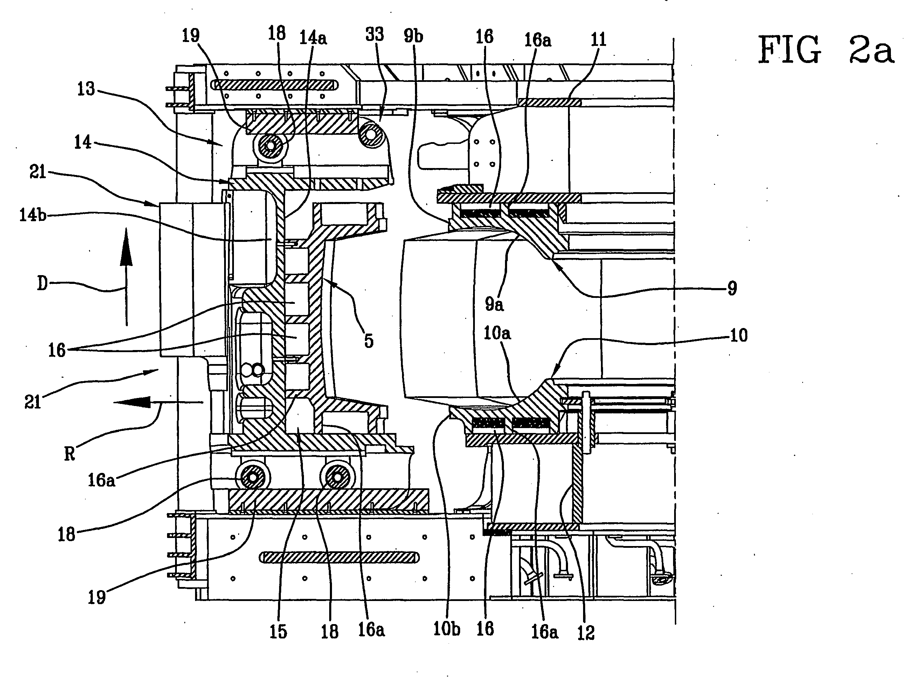

In particular with reference to Figures 1 and 2, the press 1 comprises a supporting frame 2 with a base portion 2a having a substantially annular shape, and an upper portion 2b opposite the base portion 2a and also having a substantially annular shape. The upper portion 2b and the base portion 2a are associated with one another by means of a plurality of uprights 2c positioned at the outer.extension of the portions 2a and 2b.

Extending between the base portion 2a and the upper portion 2b there is a supporting structure 32 inside which there is a mould 3 forming a toroidal chamber 4 with a central axis "X", for containing a tyre to be vulcanised (not illustrated in the accompanying drawings).

In the preferred example, illustrated in the accompanying drawings, the structure 32 and the inner mould 3 are two separate elements associated with one another. However, in other embodiments, the mould 3 may be formed directly by the structure 32.

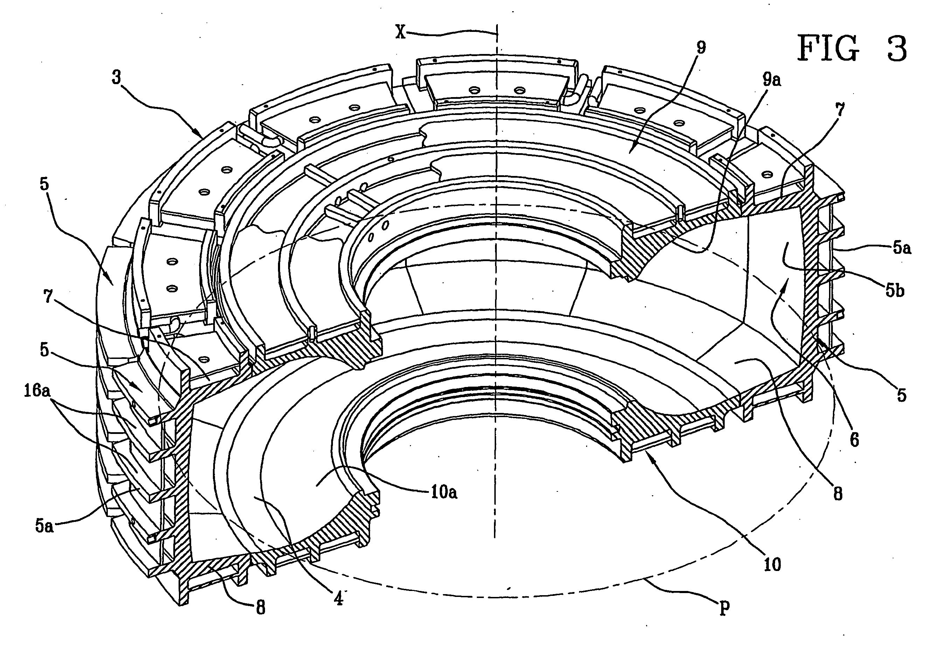

In particular with reference to Figure 3, it should be noticed that the mould 3 consists of a plurality of sectors 5 positioned along a circumferential path "P" coaxial with the central axis "X" of the toroidal chamber 4, (an axis which, in practice, is vertical).

Each sector 5 is substantially "C" shaped, having an outer surface 5a facing the structure 32 and a concave surface 5b on the opposite side to the outer surface 5a and in conjunction with the concave surfaces 5b of the adjacent sectors 5, constituting a continuous surface 6 for forming the tread of the tyre to be vulcanised.

It should also be noticed that each sector 5 has' an upper-portion 7 and a lower portion 8, both projecting towards the central axis of the toroidal, chamber 4 and opposite one another.

The mould 3 also comprises an upper cheek 9 and a lower cheek 10, opposite one another and positioned respectively at the upper portion 2b and the base portion 2a of the frame 2. The cheeks 9 and 10 have a substantially annular shape and have respective inner surfaces 9a, 10a with a curved profile (in radial section) designed to form the sidewalls of the tyre to be vulcanised.

The cheeks 9 and 10 also have respective circular outer edges 9b, 10b coaxial with the longitudinal axis "X" and which can be abutted respectively to the upper portion 7 and the lower portion 8 of each sector 5.

As the cross-section in Figure 2 shows more clearly, the cheeks 9 and 10 engage with supports 11, 12 (part of the structure 32), each of which may be associated with a portion 2a, 2b of the frame 2. In particular, the upper cheek 9 is connected to a support 11, also having a substantially circular shape, which is removably inserted below the upper portion 2b of the frame 2.

In this way, to insert the tyre in or remove it from the chamber 4, the support 11 is removed with the respective cheek 9 to give access to the inside of the chamber 4.

The lower cheek 10 is connected to the respective support 12 which rests on the base portion 2a of the frame 2.

The structure 32 also comprises a plurality of elements 33 able to move along a direction "R" which is radial relative to the circumferential path "P" centred on the central axis "X". In the embodiment illustrated, each movable element 33 consists of a carriage 14 with which a respective sector 5 of the mould 3 is associated.

The movable elements 33 are also associated with respective movement means 13 designed to move them between a position in which they have been moved towards one another in which they are drawn near one another to constitute the continuous surface 6 (by drawing the individual sectors near one another in the embodiment illustrated), and a position in which they have been moved away from one another in which they are circumferentially distanced from one another.

Each movable element 33 can move along the direction "R" with a to and fro motion between a first position (Figure 2) corresponding to the position in which they have been moved towards one another and at second position corresponding to the position in which they have been moved away from one another (Figure 2a).

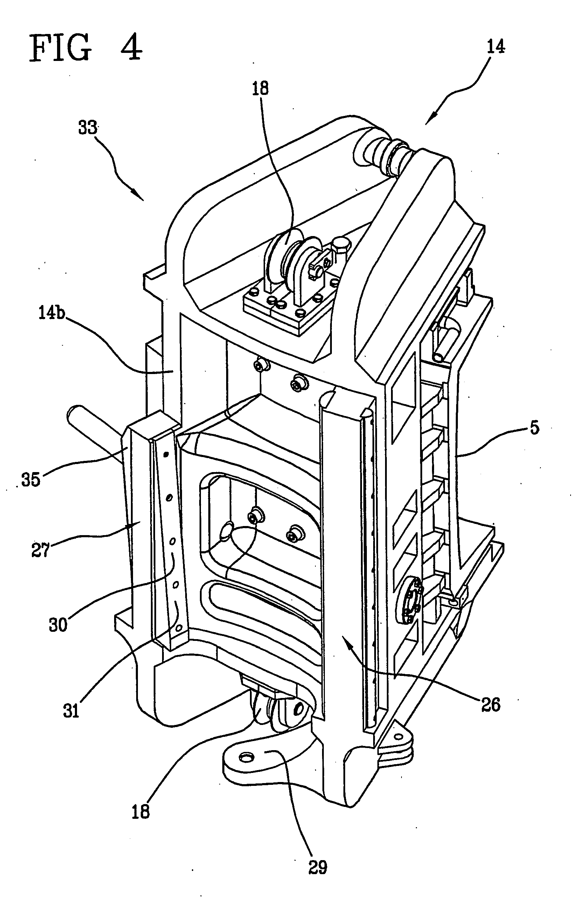

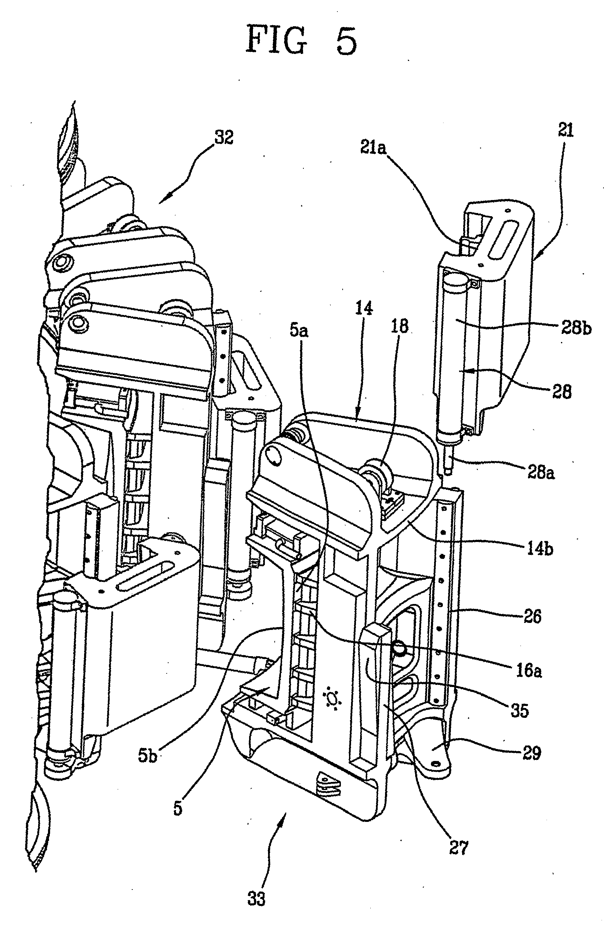

As Figures 4 and 5 show more clearly, each carriage 14 has an inner surface 14a, towards the toroidal chamber 4 (towards the respective sector 5 in the accompanying drawings), and an outer surface 14b on the opposite side to the inner surface 14a.

In this situation, the inner surface 14a of each carriage, 14 is removably associated with the outer surface 5a of a respective sector 5 to move the sector 5 into the respective positions in which the sectors have been moved towards/away from one another. Moreover, advantageously, the sectors 5 are removably associated with the respective carriages 14 by suitable fixing means, (not illustrated) so that the press can be used with a plurality of different sectors 5. The same applies for the cheeks 9, 10 mounted on the respective supports 11, 12.

Therefore, depending on the dimensions and outline of the tyre to be vulcanised, suitable sectors 5 and suitable cheeks 9, 10 may be used to form a toroidal chamber 4 suited to the particular production requirements of the tyres.

In the example illustrated, the movement means 13 have a plurality of movement elements 17 each associated with a predetermined number of carriages 14 for moving the movable elements 33 with a to and fro motion along the radial direction "R" between the first and second positions. In particular, each movement element 17 is associated with a different pair of adjacent carriages 14 and consists of a pneumatic or hydraulic piston, suitably controlled by an electronic activation system (of the known type and therefore not described in further detail) designed to move the carriages 14, preferably simultaneously. As illustrated in Figure 1, the movement element 17 engages on the base portion 2a of the frame 2 between the two carriages 14 with which it is associated by suitable connecting means (also of the known type and therefore not described and illustrated).

The carriages 14 also have rolling bearings 18 (wheels in the accompanying drawings) engaged at a lower and upper zone of each carriage 14. In particular, as illustrated in Figures 2 and 2a, on the bottom of each carriage 14 there are two bearings 18 which run on a guide 19 projecting from the base portion 2a. Moreover, on the top of the carriage 14 there is a bearing 18 which runs on a guide 19 engaged on the upper portion 2b.

Advantageously, the guides 19 extend radially relative to the circumferential path "P" and define the radial direction "R" of movement of the carriages 14.

In this way, the carriages 14 can be moved, running on the guides 19 between the first and the second positions to close the toroidal chamber 4 (Figure 2) or to open the chamber 4 (Figure 2a).

The press 1 also comprises heating means 15 operatively associated with the mould 3 to heat the cheeks 9, 10 and the sectors 5 in the respective position in which they have been moved towards one another.

In more detail, the heating means 15 comprise a plurality of ducts 16 for the passage of a heating fluid (such as steam) positioned around the mould 3.

Advantageously, as illustrated more clearly in Figures 2 and 2a the ducts 16 for the passage of the heating fluid are made between the mould 3 and the structure 32, in particular between the outer, surfaces 5a of the sectors 5 and the inner surfaces 14a of the respective carriages 14, and between the cheeks 9, 10 and the respective supports 11, 12.

Said ducts 16 are preferably formed between the inner surface 14a of each carriage 14 and thin plates 16a projecting from the outer-surface 5a of each sector 5. Similarly, the ducts 16 positioned at the cheeks 9, 10 are formed between the supports 11, 12 and the thin plates 16a projecting from the cheeks 9, 10.

The press 1 also comprises locking means 20 associated with the carriages 14 to reversibly lock the sectors 5 in the respective position in which they have been moved towards one another. As is better illustrated below, in the embodiment illustrated, the locking means 20 are also in turn part of the movement means 13 since they have the function of moving the movable elements 33 close to the position in which they have been moved towards one another.

The locking means 20 comprise a plurality of slides 21, each acting between two movable elements 33 side by side and sliding between a coupled position (Figure 2) in which it connects together the two adjacent movable elements with which it is associated, preventing them from moving away from one another, and a released position (Figure 2a) in which it allows them to move away from one another.

In particular, as is explained more clearly below, between each slide 21 and at least one of the two movable elements 33 with which it is associated there is a connection (preferably of the angled-plane type) made in such a way that the movement of the slide 21 towards the coupled position causes a thrust on the two movable elements 33 in the direction perpendicular to the radial direction "R" (that is to say, in a direction at a tangent to a circle whose centre is at the axis "X").

Every slide 21 has an inner surface 21 a with a first and a second portion 22, 23 (projecting radially towards the inside of the press in the accompanying drawing) each of which, in practice, is associated with a respective, moveable element 33 (carriage 14).

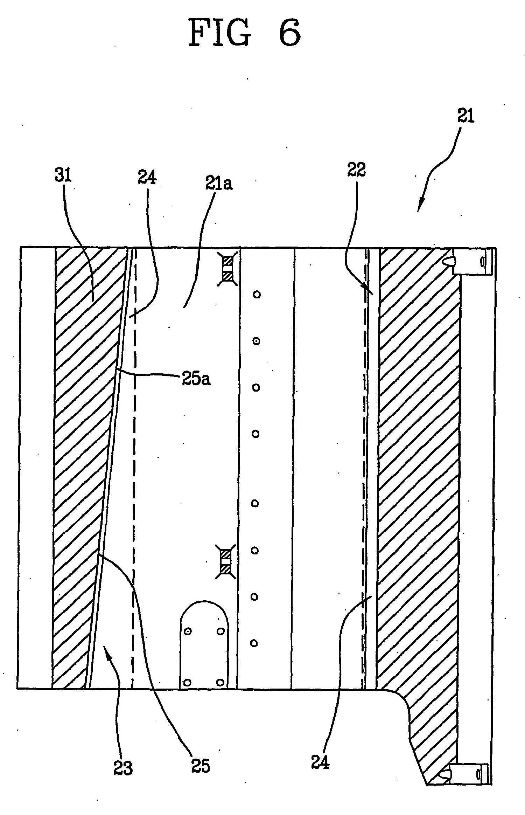

In particular, as illustrated in detail in Figures 5 and 6, the first portion 22 of each slide 21 has a guide 24 forming a race. The second portion 23 also forms a first sliding block 25 extending at an angle to the extension of the first portion 22 guide 24. In other words, looking at Figure 6, the first sliding block 25 has a contact surface 25a facing towards the first portion 22 and angled from an upper zone of the slide 21 where it is at a minimum distance form the first portion 22 guide 24, to a lower zone where it is at a maximum distance from it.

In particular with reference to Figures 4 and 5, each movable element 33 has a sliding rail 26 extending on the outer surface 14b of the carriage 14.

The rail 26 extends parallel with the longitudinal axis "X" of the toroidal chamber 4 and, in practice, is slidably connected to the respective guide 24 of the first portion 22 of the slide 21.

In this way, each slide 21 can slide along the rail 26 of a movable element 33, with which it is advantageously associated.

In the accompanying drawings, the movement between the coupled and released positions therefore occurs along a direction "D" perpendicular to the radial direction "R" of movement of the carriages 14 and parallel with the longitudinal axis "X" of the toroidal chamber 4.

The slides 21 are moved by actuators 28, each associated with a respective slide 21 to move it along the direction "D".

Each actuator 28 preferably consists of a hydraulic or pneumatic cylinder drawn near to the respective, slide 21 and extending along the longitudinal extension of the slide, that is to say, along the direction of movement "D" (Figures 1 and 5). In this situation, as is advantageously illustrated in the exploded view in Figure 5, the actuator,28 has a piston 28a connected to a carriage 14 projection 29 on which the rail 26 on which the slide 21 slides is made, and a cylinder 28b engaging with the slide 21.

It should also be noticed that each movable element 33 also has a second sliding block 27 with an angled surface 30 facing towards the rail 26 and in practice slidably associated with the contact surface 25a of the first sliding block 25.

The angled surface 30 is advantageously shaped to match the contact surface 25a of the first sliding block 25 in such' a way that the respective projecting portions 31 of the first sliding block 25 and of the angled surface 30 (Figures 4 and 6) are drawn close to one another in the slide 21 coupled position and distanced from one another in the released position. However, in particular, in the preferred embodiment the sizing of the various parts is such that, in the coupled position, the projecting portions 31 of the first sliding block 25 and of the angled surface 30 are connected respectively to the less projecting portions respectively of the angled surface 30 and of the sliding block 25.

In this way, when the movable elements 33 are placed in the position in which they have been moved towards one another, the slides 21 slide along the rail 26 to stably lock the carriages 14 and the sectors 5 together by means of the action of the two angled surfaces 25, 30.

Each slide 21 also comprises, on its inner surface 21a, a contact element 34 (consisting of an idle roller in the accompanying drawings) positioned at a predetermined distance from the angled surface 25 and designed to interact with an additional angled surface 35 made on the movable element 33. In particular, in the accompanying drawings, the additional angled surface 35 is parallel with the angled surface 30 and faces in the opposite direction to it.

In the example illustrated, the movement of the slide 21 from the released position to the coupled position, and vice versa; occurs thanks to a vertical movement of the slide from the top (Figure 2a) downwards (Figure 2), and vice versa.

Therefore, to couple together two movable elements 33, the slides 21 are moved downwards along the direction "D", making the first sliding block 25 slide on the angled surface 30.

Consequently, each slide 21 applies an attractive force between the two carriages which, if they are still not in the position in which they have been moved towards one another, also causes them to move radially towards the centre of'the toroidal chamber 4 until the sectors 5 make contact with the edges 9a, 10a of the cheeks 9, 10. This attractive force has a component which, although limited, acts along the directions of radial movement of the movable elements 33.

It should be noticed that, as already indicated, the movement of the slide 21 generates on the respective carriages 14 a force tangential to the central axis "X".

When the vulcanising process is complete, the slides 21 are lifted along the direction "D" moving the projecting portions 31 of the first sliding block 25 and of the angled surface 30 away from one another.

At the same time, if the slide 21 has a contact element 34 (as shown in the accompanying drawings), the latter slides along the additional angled surface 35, causing a tangential repulsive force opposite to the force encountered in the coupling step to be applied on the movable elements 33.

This tangential force also has components along the radial directions "R" of each carriage 14 and therefore causes a first movement of the carriages 14 away from one another.

As indicated above, in the example illustrated, the locking means 20 are the part of the movement means 13 which cause the movable elements to move when the latter are close to the position in which they have been moved towards one another.

Consequently, the carriages 14 are released and can be brought into the position in which they have been moved away from one another. In this situation, the mould 3 is open to allow removal of the vulcanised tyre from the chamber 4 and insertion of a new tyre to be vulcanised in the chamber 4.

The present invention brings important advantages.

Firstly, it should be noticed that the carriage locking/releasing operations in the position in which they have been moved towards one another are carried out automatically, without manual intervention by the operator.

The actuators automatically move the slides to release or connect the carriages with consequent mould opening or closing. As a result, vulcanising operations are speeded up, with significant increases in terms of production for each individual tyre.

It should also be noticed that, given the high mould heating temperatures, operator safety is preserved since manual work on the press is not required.

In the preferred example, the press is also particularly versatile and can be used to vulcanise a plurality of different types of tyres. The sectors and cheeks can be removed from the carriages and supports, and can be substituted with sectors and cheeks having a different shape and size. Consequently, if different types of tyres have to be produced, different sectors are mounted to adapt, the mould to the tyres to be vulcanised.

Finally, another advantage of the present invention is provided by the heating means, which extend not in the parts of the press, but between the supporting structure and the mould itself. In this way, only the sectors and the cheeks are heated, rather than the whole press. Consequently, much less heat can be used than in the prior art methods described in the introduction to, this text.

## Claims

1. A tyre vulcanising press comprising:
a supporting structure (32);
a mould (3) associated with the supporting structure and forming a toroidal chamber (4) extending around a central axis (X), for containing a tyre to be vulcanised;
the structure (32) comprising a plurality of elements (33) able to move radially relative to the central axis (X) between a position in which they have been moved towards one another in which they are drawn near one another along a circumferential path (P), and a position in which they have been moved away from one another in which they are distanced from one another;
locking means (20) for reversibly locking the movable elements (33) in the respective position in which they have been moved towards one another; and
heating means (15) operatively associated with the mould (3);
the tyre vulcanising press being **characterised in that** the locking means (20) comprise a plurality of slides (21), each positioned at two adjacent movable elements (33) at least when the latter are in the position in which they have been moved towards one another, and able to slide between a coupled position in which the slide connects together the two adjacent movable elements (33), and a released position in which the movable elements (33) can move away from one another.

2. The press according to the foregoing claim, **characterised in that**, at least in the coupled position, each slide (21) applies, between the two adjacent movable elements (33), a tractive force acting along a direction at a tangent to a circle centred on the central axis (X).

3. The press according to claim 1 or 2, **characterised in that** each slide (21) can move between the respective coupled and released positions along a direction (D) parallel with the central axis (X).

4. The press according to any of the foregoing claims, **characterised in that** the mould (3) is formed by the supporting structure (32).

5. The press according to any of the claims from 1 to 3, **characterised in that** the mould comprises a plurality of sectors (5) positioned along the circumferential path (P) and associated with the movable elements (33), in conjunction with one another forming a continuous surface (6) for forming the tread of the tyre to be vulcanised.

6. The press according to the foregoing claim, **characterised in that** the mould (3) also comprises an upper cheek (9) and a lower cheek (10), opposite one another and positioned respectively at an upper and a lower zone of the toroidal chamber (4) for forming side portions of the tyre to be vulcanised.

7. The press according to claim 6, **characterised in that** each cheek (9, 10) has a substantially annual shape, with a circular outer edge (9a, 10a); each sector (5) having an upper portion (7) and a lower portion (8) facing towards the centre of the toroidal chamber (4) and respectively connected, in the position in which they have been moved towards one another, to the outer edge (9a, 10a) of the upper and lower cheeks (9, 10).

8. The press according to any of the foregoing claims, **characterised in that** the movable elements (33) consist of a plurality of carriages (14) each able to move along a radial direction (R).

9. The press according to claims 5 and 8, **characterised in that** each carriage (14) has an inner surface (14a) facing towards the toroidal chamber (4) and able to connect with a respective sector (5), and an outer surface (14b) on the opposite side to the inner surface (14a).

10. The press according to claim 9, **characterised in that** each sector (5) is substantially "C" shaped, having an outer surface (5a) which can be removably associated with the inner surface (14a) of a respective carriage (14), and a concave surface (5b) forming, in conjunction with the concave surface (5b) of the adjacent sectors (5), the continuous surface (6) for forming the tread.

11. The press according to any of the claims from 5 to 10, **characterised in that** the heating means (15) comprise a plurality of ducts (16) for the passage of a heating fluid, the ducts being positioned around the mould (3).

12. The press according to claims 10 and 11, **characterised in that** the ducts (16) for the passage of the heating fluid are made between the outer surface (5a) of the sectors (5) and the inner surfaces (14a) of the respective carriages (14).

13. The press according to any of the foregoing claims, **characterised in that** each movable element (33) and each slide (21) haye respectively at least one sliding rail (26) and at least one guide (24), the rail (26) and the guide (24) being connected to one another.

14. The press according to the foregoing, claim, **characterised in that** each slide (21) has a first portion (22) slidably associated with a first movable element (33) and a second portion (23) drawn near the first portion (22) and slidably associated with a second movable element (33) adjacent to the first movable element.

15. The press according to the foregoing claim, **characterised in that** each movable element (33) comprises a second sliding block (27) forming an angled surface (30) facing towards the rail (26) and slidably connected to a first sliding block (25) made on the second portion (23) of the slide (21).

16. The press according to the foregoing claim, **characterised in that** a plane, perpendicular to the angled surface (30), is tangent to a cylindrical surface centred on the central axis (X).

17. The press according to claim 15 or 16, **characterised in that** the first sliding block (25) is shaped to match the angled surface (30) and **in that** the first sliding block (25) and the angled surface (30) have respective projecting portions (31); said projecting portions (31) being drawn close to one another when the slide (21) is in the coupled position and being distanced from one another when the slide (21) is in the released position.

18. The press according to any of the claims from 13 to 17, **characterised in that** each slide (21) and each movable element (33) has respectively at least one contact element (34) and at least one angled sliding surface (35) which are connected to one another.

19. The press according to the foregoing claim, **characterised in that** a plane perpendicular to the angled surface (35) is tangent to a cylindrical surface centred on the central axis (X).

20. The press according to the foregoing claim, **characterised in that** the movement of the slide (21) from the released position to the coupled position causes, a force between the two movable elements (33) with which the slide (21) is connected, said force causing the two movable elements (33) to move away from one another; said force acting along a direction tangent to a circle centred on the central axis (X) and said force being caused through interaction between the contact element (34) and the respective angled surface (35).

21. The press according to any of the foregoing claims, **characterised in that** the locking means (20) also comprise a plurality of actuators (28), each associated with a respective slide (21), for moving the slide (21) along a direction (D) parallel with the longitudinal axis (X) of the toroidal chamber (4).

22. The press according to the foregoing claim, **characterised in that** the actuator (28) is a pneumatic or hydraulic cylinder.

23. The press according to any of the foregoing claims, also comprising means (13) for moving the movable elements (33).

24. The press according to the foregoing claim, **characterised in that** the movement means (13) comprise a plurality of movement elements (17) each associated with a predetermined number of movable elements (33) for moving the latter with a to and fro motion along a radial direction (R) between the position in which they have been moved towards one another and the position in which they have been moved away from one another.

25. The press according to the foregoing claim, **characterised in that** each movement element (17) is associated with a different pair of adjacent movable elements (33).

## Patentansprüche

1. Reifenvulkanisierpresse, enthaltend:
- eine Trägerstruktur (32);
- eine Form (3), zugeordnet der Trägerstruktur und eine Ringkammer (4) bildend, die sich um eine mittlere Achse (X) erstreckt, um einen zu vulkanisierenden Reifen aufzunehmen;
wobei die Struktur (32) eine Anzahl von Elementen (33) enthält, in der Lage, sich radial im Verhältnis zu der mittleren Achse (X) zu bewegen zwischen einer Position, in welcher sie aufeinander zu bewegt worden sind und in welcher sie eines dicht an dem anderen entlang einer umlaufenden Bahn (P) gezogen werden, und einer Position, in welcher sie voneinander fort bewegt worden sind und in welcher sie einen Abstand voneinander haben:
- Blockiermittel (20) zum gegenseitigen Blockieren der beweglichen Elemente (33) in der jeweiligen Position, in welcher sie aufeinander zu bewegt worden sind; und
- Heizmittel (15), die betrieblich der Form (3) zugeordnet sind;
wobei die Reifenvulkanisierpresse **dadurch gekennzeichnet ist, dass** die Blockiermittel (20) eine Anzahl von Gleitern (21) enthalten, jeder positioniert an zwei aneinandergrenzenden beweglichen Elementen (33), wenigstens wenn sich letztere in der Position befinden, in welcher sie aufeinander zu bewegt worden sind, und in der Lage, zu gleiten zwischen einer gekoppelten Position, in welcher sich der Gleiter mit zwei aneinandergrenzenden beweglichen Elementen (33) verbindet, und einer freigegebenen Position, in welcher sich die beweglichen Elemente (33) voneinander fort bewegen können.

2. Presse nach dem vorstehenden Patentanspruch, **dadurch gekennzeichnet, dass** in der gekoppelten Position jeder Gleiter (21) zwischen den beiden aneinandergrenzenden beweglichen Elementen (33) eine Zugkraft anwendet, die entlang einer Richtung als eine Tangente zu einem Kreis wirkt, zentriert auf die mittlere Achse (X).

3. Presse nach Patentanspruch 1 oder 2, **dadurch gekennzeichnet, dass** sich jeder Gleiter (21) zwischen den jeweiligen gekoppelten und freigegebenen Positionen entlang einer Richtung (D) parallel zu der mittleren Achse (X) bewegen kann.

4. Presse nach jedem der vorstehenden Patentansprüche, **dadurch gekennzeichnet, dass** die Form (3) durch die Trägerstruktur (32) gebildet wird.

5. Presse nach jedem der Patentansprüche von 1 bis 3, **dadurch gekennzeichnet, dass** die Form eine Anzahl von Sektoren (5) enthält, positioniert entlang der umlaufenden Bahn (P) und zugeordnet den beweglichen Elementen (33), wobei diese in Verbindung miteinander eine kontinuierliche Oberfläche (6) zum Formen der Lauffläche des zu vulkanisierenden Reifens bilden.

6. Presse nach dem vorstehenden Patentanspruch, **dadurch gekennzeichnet, dass** die Form (3) ebenfalls eine obere Wange (9) und eine untere Wange (10) enthält, sich einander gegenüberliegend und jeweils in einem oberen und einem unteren Bereich der Ringkammer (4) positioniert, um die Seitenabschnitte des zu vulkanisierenden Reifens zu formen.

7. Presse nach Patentanspruch 6, **dadurch gekennzeichnet, dass** jede Wange (9, 10) im wesentlichen eine Ringform hat, mit einem kreisförmigen äusseren Rand (9a, 10a); wobei jeder Sektor (5) einen oberen Abschnitt (7) und einen unteren Abschnitt (8) aufweist, zugewandt der Mitte der Ringkammer (4), und die in der Position, in welcher sie zueinander hin bewegt wurden, jeweils an den äusseren Rand (9a, 10a) der oberen und unteren Wangen (9, 10) angeschlossen sind.

8. Presse nach jedem der vorstehenden Patentansprüche, **dadurch gekennzeichnet, dass** die beweglichen Elemente (33) aus einer Anzahl von Wagen (14) bestehen, jeder in der Lage, sich entlang einer radialen Richtung (R) zu bewegen.

9. Presse nach den Patentansprüchen 5 und 8, **dadurch gekennzeichnet, dass** jeder Wagen (14) eine innere Oberfläche (14a) hat, die der Ringkammer (4) zugewandt und in der Lage ist, sich mit einem jeweiligen Sektor (5) zu verbinden, und eine äussere Oberfläche (14b) auf der entgegengesetzten Seite von der inneren Oberfläche (14a).

10. Presse nach Patentanspruch 9, **dadurch gekennzeichnet, dass** jeder Sektor (5) im wesentlichen "C"-förmig ist, eine äussere Oberfläche (5a) hat, die lösbar mit der inneren Oberfläche (14a) eines jeweiligen Wagens (14) verbunden werden kann, und eine konkave Oberfläche (5b), die in Verbindung mit der konkaven Oberfläche (5b) des angrenzenden Sektors (5) die kontinuierliche Oberfläche (6) zum Formen der Lauffläche bildet.

11. Presse nach einem jeden der Patentansprüche von 5 bis 10, **dadurch gekennzeichnet, dass** die Heizmittel (15) eine Anzahl von Leitungen (16) für den Durchlauf einer Heizflüssigkeit enthalten, wobei die Leitungen rund um die Form (3) positioniert sind.

12. Presse nach den Patentansprüchen 10 und 11, **dadurch gekennzeichnet, dass** die Leitungen (16) für den Durchlauf der Heizflüssigkeit zwischen der äusseren Oberfläche (5a) der Sektoren (5) und den inneren Oberflächen (14a) der jeweiligen Wagen (14) angeordnet sind.

13. Presse nach jedem der vorstehenden Patentansprüche, **dadurch gekennzeichnet, dass** jedes bewegliche Element (33) und jeder Gleiter (21) jeweils wenigstens eine Gleitschiene (26) und wenigstens eine Führung (24) haben, wobei die Schiene (26) und die Führung (24) miteinander verbunden sind.

14. Presse nach dem vorstehenden Patentanspruch, **dadurch gekennzeichnet, dass** jeder Gleiter (21) einen ersten Abschnitt (22) hat, der gleitbar einem ersten beweglichen Element (33) zugeordnet ist, und einen zweiten Abschnitt (23), gezogen dicht zu dem ersten Abschnitt (22) hin und gleitbar einem zweiten beweglichen Element (33) zugeordnet, angrenzend an das erste bewegliche Element.

15. Presse nach dem vorstehenden Patentanspruch, **dadurch gekennzeichnet, dass** jedes bewegliche Element (33) einen zweiten Gleitschuh (27) enthält, der eine nach unten zu der Schiene (26) gerichtete angewinkelte Oberfläche (30) bildet und gleitbar an einen ersten Gleitschuh (25) angeschlossen ist, hergestellt an dem zweiten Abschnitt (23) des Gleiters (21).

16. Presse nach dem vorstehenden Patentanspruch, **dadurch gekennzeichnet, dass** eine lotrecht zu der angewinkelten Oberfläche (30) verlaufende Ebene tangential zu einer zylindrischen Oberfläche ist, zentriert auf die mittlere Achse (X).

17. Presse nach Patentanspruch 15 oder 16, **dadurch gekennzeichnet, dass** der erste Gleitschuh (25) passend zu der angewinkelten Oberfläche (30) geformt ist, und **dadurch**, dass der erste Gleitschuh (25) und die angewinkelte Oberfläche (30) jeweils hervorstehende Abschnitte (31) haben; wobei die hervorstehenden Abschnitte (31) dicht zueinander hin gezogen werden, wenn sich der Gleiter (21) in der gekoppelten Position befindet, und wobei sie voneinander abstehend sind, wenn sich der Gleiter (21) in der freigegebenen Position befindet.

18. Presse nach einem jeden der Patentansprüche von 13 bis 17, **dadurch gekennzeichnet, dass** jeder Gleiter (21) und jedes bewegliche Element (33) jeweils wenigstens ein Kontaktelement (34) und wenigstens eine angewinkelte Gleitfläche (35) haben, welche miteinander verbunden sind.

19. Presse nach dem vorstehenden Patentanspruch, **dadurch gekennzeichnet, dass** eine lotrecht zu der angewinkelten Oberfläche (35) verlaufende Ebene tangential zu einer zylindrischen Oberfläche ist, zentriert auf die mittlere Achse (X).

20. Presse nach dem vorstehenden Patentanspruch, **dadurch gekennzeichnet, dass** die Bewegung des Gleiters (21) aus der freigegebenen Position in die gekoppelte Position eine Kraft zwischen den beiden beweglichen Elementen (33) auslöst, mit welchen der Gleiter (21) verbunden ist, wobei die genannte Kraft bewirkt, dass sich die beiden beweglichen Elemente (33) voneinander fort bewegen; wobei die genannte Kraft entlang einer Richtung tangential zu einem auf die mittlere Achse (X) zentrierten Kreis wirkt und die genannte Kraft durch das Zusammenwirken zwischen dem Kontaktelement (34) und der jeweiligen angewinkelten Oberfläche (35) hervorgerufen wird.

21. Presse nach einem jeden der vorstehenden Patentansprüche, **dadurch gekennzeichnet, dass** die Blockiermittel (20) ebenfalls eine Anzahl von Trieben (28) enthalten, jeder einem jeweiligen Gleiter (21) zugeordnet, um den Gleiter (21) entlang einer Richtung (D) parallel zu der Längsachse (X) der Ringkammer (4) zu bewegen.

22. Presse nach dem vorstehenden Patentanspruch, **dadurch gekennzeichnet, dass** der Trieb (28) ein Druckluft- oder Hydraulikzylinder ist.

23. Presse nach einem jeden der vorstehenden Patentansprüche, ebenfalls enthaltend Mittel (13) zum Bewegen der beweglichen Elemente (33).

24. Presse nach dem vorstehenden Patentanspruch, **dadurch gekennzeichnet, dass** die Bewegungsmittel (13) eine Anzahl von Bewegungselementen (17) enthalten, jedes zugeordnet einer bestimmten Zahl von beweglichen Elementen (33) zum Verschieben von letzteren mit einer Hin- und Herbewegung entlang einer radialen Richtung (R) zwischen der Position, in welcher sie zueinander hin bewegt worden sind, und der Position, in welcher sie voneinander fort bewegt worden sind.

25. Presse nach dem vorstehenden Patentanspruch, **dadurch gekennzeichnet, dass** jedes Bewegungselement (17) einem unterschiedlichen Paar von aneinandergrenzenden beweglichen Elementen (33) zugeordnet ist.

## Revendications

1. Presse à vulcaniser des pneus comprenant:
une structure de support (32);
un moule (3) associé à la structure de support et format une chambre toroïdale (4) se développant autour d'un axe central (X), destiné à contenir un pneu à vulcaniser;
la structure (32) comprenant une pluralité d'éléments (33) en mesure de se mouvoir de façon radiale par rapport à l'axe central (X) entre une position dans laquelle il ont été mus l'un vers l'autre dans laquelle ils sont tirés près l'une de l'autre le long d'un parcours circonférentiel (P) et une position dans laquelle ils ont été éloignés l'un de l'autre de façon à être espacés l'un de l'autre;
moyens de verrouillage (20) destinés à verrouiller de façon réversible les éléments mobiles (33) dans la position dans laquelle ils ont été mus l'un vers l'autre; et
moyens de chauffage (15) associés de façon opérationnelle au moule (3);
la presse à vulcaniser des pneus étant **caractérisée en ce que** les moyens de verrouillage (20) comprennent une pluralité de glissières (21), dont chacune est positionnée sur deux éléments mobiles adjacents (33) au moins quand ces derniers sont dans la position dans laquelle ils ont été mus l'un vers l'autre, et capable de glisser entre une position couplée dans laquelle la glissière relie ensemble les deux éléments mobiles adjacents (33), et une position libérée dans laquelle les éléments mobiles (33) peuvent s'éloigner l'un de l'autre.

2. La presse selon la revendication précédente, **caractérisée en ce que**, au moins dans la position couplée, chaque glissière (21) applique, entre les deux éléments mobiles adjacents (33), une force de traction agissant dans une direction tangente à un cercle centré sur l'axe central (X).

3. La presse selon la revendication 1 ou 2, **caractérisée en ce que** chaque glissière (21) peut se mouvoir entre les positions couplées et libérées dans une direction (D) parallèle à l'axe central (X).

4. La presse selon l'une quelconque des revendications précédentes, **caractérisé en ce que** le moule (3) est formé par la structure de support (32).

5. La presse selon l'une quelconque des revendications de 1 à 3, **caractérisé en ce que** le moule comprend une pluralité de secteurs (5) positionnés sur le parcours circonférentiel (P) et associés aux éléments mobiles (33), en conjonction l'un avec l'autre, formant une surface continue (6) destinée à former la bande de roulement du pneu à vulcaniser.

6. La presse selon la revendication précédente, **caractérisé en ce que** le moule (3) comprend également une joue supérieure (9) et une joue inférieure (10), opposées l'une à l'autre et positionnées respectivement dans une zone supérieure et une zone inférieure de la chambre toroïdale (4) pour la formation des portions latérales du pneu à vulcaniser.

7. La presse selon la revendication 6, **caractérisée en ce que** chaque joue (9, 10) a une forme substantiellement annulaire, avec un bord extérieur circulaire (9a, 10a); chaque secteur (5) ayant une portion supérieure (7) et une portion inférieure (8) dirigées vers le centre de la chambre toroïdale (4) et connectées respectivement, dans la position dans laquelle elles ont été mues l'une vers l'autre, au bord extérieur (9a, 10a) des joues supérieure et inférieure (9, 10).

8. La presse selon l'une quelconque des revendications précédentes, **caractérisée en ce que** les éléments mobiles (33) consistent en une pluralité de chariots (14), dont chacun est capable de se mouvoir dans une direction radiale (R).

9. La pression selon la revendication 5 et 8, **caractérisée en ce que** chaque chariot (14) a une surface interne (14a) dirigée vers la chambre toroïdale (4) et capable de connecter avec un secteur correspondant (5), et une surface externe (14b) sur le côté opposé à la surface interne (14a).

10. La presse selon la revendication 9, **caractérisée en ce que** chaque secteur (5) est substantiellement en forme de "C", ayant une surface externe (5a) qui peut être associée de façon amovible A la surface interne (14a) d'un chariot correspondant (14), et une surface concave (5b) formant, en conjonction avec la surface concave (5b) des secteurs adjacents (5), la surface continue (6) pour former la bande de roulement.

11. La presse selon l'une quelconque des revendications de 5 à 10 **caractérisée en ce que** les moyens de chauffage (15) comprennent une pluralité de tuyaux (16) pour le passage d'un fluide chauffant, les tuyaux étant positionnés autour du moule (3);

12. La presse selon les revendications 10 et 11, **caractérisée en ce que** les tuyaux (16) destinés au passage du fluide chauffant sont faits entre la surface externe (5a) des secteurs (5) et les surfaces externes (14a) des chariots correspondants (14)

13. La presse selon l'une quelconque des revendications précédentes, **caractérisé en ce que** chaque élément mobile (33) et chaque glissière (21) ont respectivement au moins un rail coulissant (26) et au moins un guide (24), le rail (26) et le guide (24) étant connectés l'un à l'autre.

14. La presse selon la revendication précédente, **caractérisée en ce que** chaque glissière (21) a une première portion (22) associée de façon coulissante à un premier mouvement mobile (33) et une deuxième portion (23) tirée près de la première portion (22) et associée de façon coulissante avec un deuxième élément mobile (33) adjacente au premier élément mobile.

15. La presse selon la revendication précédente, **caractérisée en ce que** chaque élément mobile (33) comprend un deuxième bloc coulissant (27) formant une surface angulaire (30) orientée vers le rail (26) et connectée de façon coulissante à un premier bloc coulissant (25) fait sur la deuxième portion (23) de la glissière (21).

16. La presse selon la revendication précédente, **caractérisée en ce qu'**un plan, perpendiculaire à la surface angulaire (30), est tangent à une surface cylindrique centrée sur l'axe central (X).

17. La presse selon les revendications de 15 ou 16, **caractérisée en ce que** le premier bloc coulissant (25) est formé pour correspondre à la surface angulaire (30) et ce que le premier bloc coulissant (25) et la surface angulaire (30) ont des portions saillantes respectives (31); lesdites portions saillantes (31) étant tirées près l'une de l'autre quand la glissière (21) est dans la position couplée et étant espacées l'une de l'autre quand la glissière (21) est dans la position libérée.

18. La presse selon l'une quelconque des revendications de 13 à 17, **caractérisée en ce que** chaque glissière (21) et chaque élément mobile (33) a respectivement au moins un élément de contact (34) et au moins une surface coulissante angulaire (35) qui sont connectés l'un à l'autre.

19. La presse selon la revendication précédente, **caractérisé en ce qu'**un plan perpendiculaire à la surface angulaire (35) est tangent à une surface cylindrique centrée sur l'axe central (X).

20. La presse selon la revendication précédente, **caractérisée en ce que** le mouvement de la glissière (21) de la position libérée à la position couplée cause une force, entre les deux éléments mobiles (33) avec lesquels la glissière (21) est connectée, ladite force amenant les deux éléments mobiles (33) à s'éloigner l'un de l'autre; ladite force agissant dans une direction tangente à un cercle centré sur l'axe central (X) et ladite force étant causée par interaction entre l'élément de contact (34) et la surface angulaire correspondante (35).

21. La presse selon l'une quelconque des revendications, **caractérisée en ce que** les moyens de verrouillage (20) comprennent également une pluralité d'actionneurs (28), dont chacun est associé à une glissière correspondante (21), destinés à mouvoir la glissière (21) dans une direction (D) parallèle à l'axe longitudinal (X) de la chambre toroïdale (4).

22. La presse selon la revendication précédente, **caractérisée en ce que** l'actionneur (28) est un cylindre pneumatique ou hydraulique.

23. La presse selon l'une quelconque des revendications, comprenant également des moyens (13) destinés à mouvoir les éléments mobiles (33).

24. La presse selon la revendication précédente, **caractérisée en ce que** les moyens de mouvement (13) comprennent une pluralité d'éléments de mouvement (17), dont chacun est associé à un nombre prédéfini d'éléments mobiles (33), destinés à mouvoir ces derniers avec un mouvement de va-et-vient dans une direction radiale (R) entre la position dans laquelle ils ont été mus l'un vers l'autre et la position dans laquelle ils ont été éloignés l'un de l'autre.

25. La presse selon la revendication précédente, **caractérisée en ce que** chaque élément de mouvement (17) est associé à une paire différente d'éléments mobiles adjacents (33).
